# EUROPEAN PATENT SPECIFICATION

(11) **EP 3 967 892 B1**
(45) Date of publication and mention of the grant of the patent: **11.09.2024**
(21) Application number: 21192984.9
(22) Date of filing: 25.08.2021
(51) Int. Cl.: F16B 37/04, D03D 47/27, D03D 47/30, D03D 49/62

(54) **FASTENER OF WEAVING MACHINE AND FIXING DEVICE FOR SUPPORT OF THE WEAVING MACHINE**
BEFESTIGUNG EINER WEBMASCHINE UND FIXIERVORRICHTUNG ZUM STÜTZEN DER WEBMASCHINE
FIXATION DE MACHINE À TISSER ET DISPOSITIF DE FIXATION DE SUPPORT DE LA MACHINE À TISSER

(30) Priority: 15.09.2020 JP 2020154259
(43) Date of publication of application: 16.03.2022
(73) Proprietor: Kabushiki Kaisha Toyota Jidoshokki, Kariya-shi, Aichi 448-8671 (JP)
(72) Inventor: YAGI, Daisuke, Kariya-shi 448-8671 (JP); HAMAGUCHI, Masataka, Kariya-shi 448-8671 (JP)
(74) Representative: TBK

(56) References cited:
- CN-A- 102 705 339
- CN-Y- 2 809 313
- DE-A1- 2 628 324
- DE-U1- 202004 017 021
- GB-A- 2 501 013
- JP-A- 2014 201 864

## Description

The present invention relates to a fixing device for a support of a weaving machine.

### BACKGROUND ART

As a known art related to a fastener of a weaving machine and a fixing device for a support of the weaving machine, for example, Japanese Patent Application Publication JP 2014-201864 A discloses a fastener. The fastener disclosed in the Publication includes a shank and a T-shaped head formed at one end of the shank. The T-shaped head is formed in a parallelogram. The parallelogram T-shaped head has short sides and long sides. The short sides each have a length that allows the head to be inserted into a front opening of a T-shaped groove (i.e., support groove) of a sley. The long sides each have a length that regulates the rotation of the head in the support groove to prevent the head from rotating more than predetermined degrees and from falling out of the front opening. For fixing the support to the sley, the operator temporarily fixes the fastener to the support first. The operator then inserts the T-shaped head of the fastener temporarily fixed to the support into the support groove, and rotates the support. The rotated support is fitted into a positioning groove of the sley so that the upper short side and the lower short side of the T-shaped head respectively contact an upper wall and a lower wall of the T-shaped support groove, so that the rotation of the T-shaped head is regulated.

For sake of an operation, the operator may insert only the fastener into the support groove, and may fix the support to the fastener that has been already inserted in the support groove. In this case, the fastener disclosed in the Publication rotates when the operator releases the fastener, so that the fastener cannot maintain the upper short side and the lower short side of the T-shaped head respectively in contact with the upper wall and the lower wall of the T-shaped support groove (cannot keep regulation of the rotation of the head). If the fastener rotates, the T-shaped head may fall out of the support groove. Accordingly, the operator has to hold the fastener with his/her hand while fixing the support to the fastener. This decreases operator's workability for operation for fixing the support.

DE 26 28 324 A1 discloses a combination of a screw and a structure having a T-groove.

GB 2 501 013 A discloses a combination of a screw and a channel rail having a T-groove.

CN 102 705 339 A discloses another combination of a screw and a structure having a T-groove.

DE 20 2004 017021 U1 discloses a base body with a shank. The shank is inserted into a hole of a hinge member, whereupon a nut is screwed on the shank.

CN 2 809 313 Y discloses also a combination of a screw and a structure having a T-groove.

The present invention has been made in light of the above-mentioned problem. It is the object of the present invention to provide a fixing device for a support of a weaving machine, which facilitates an operation for fixing the support to the fastener inserted in a support groove of a sley.

### SUMMARY

The above object is solved by a fixing device for a support of a weaving machine having the features of claim 1.

Further developments are stated in the dependent claims.

Other aspects and advantages of the present disclosure will become apparent from the following description, taken in conjunction with the accompanying drawings, illustrating by way of example the principles of the present disclosure.

### BRIEF DESCRIPTION OF THE DRAWINGS

The present invention together with objects and advantages thereof, may best be understood by reference to the following description of the embodiments together with the accompanying drawings in which:
FIG. 1 is a perspective view of a main part of an air jet loom according to an embodiment of the present invention;
FIG. 2 is a sectional side view of a fastener and a fixing device for a support of the air jet loom according to the embodiment of the present invention;
FIG. 3 is a sectional side view of the fastener and a sley of the air jet loom according to the embodiment of the present invention;
FIG. 4A is a front view of the fastener and the fixing device for the support according to the embodiment of the present invention; FIG. 4B is a sectional view of the fastener and the fixing device for the support of FIG. 2, taken along line A-A;
FIG. 5A is a perspective view of the fastener according to the embodiment of the present invention when the fastener is viewed from a shank side of the fastener; FIG. 5B is a perspective view of the fastener when viewed from a head side of the fastener;
FIG. 6 is a front view of the fastener according to the embodiment of the present invention when viewed from the shank side;
FIG. 7 is a rear view of the fastener according to the embodiment of the present invention when viewed from the head side;
FIG. 8A is a diagram depicting an operation of the fastener according to the embodiment of the present invention; FIG. 8B is a diagram depicting an operation of a fastener according to a comparative example; and
FIG. 9 is a diagram depicting an operation of a fastener according to another embodiment of the present invention when the fastener is viewed from a shank side.

### DETAILED DESCRIPTION OF THE EMBODIMENTS

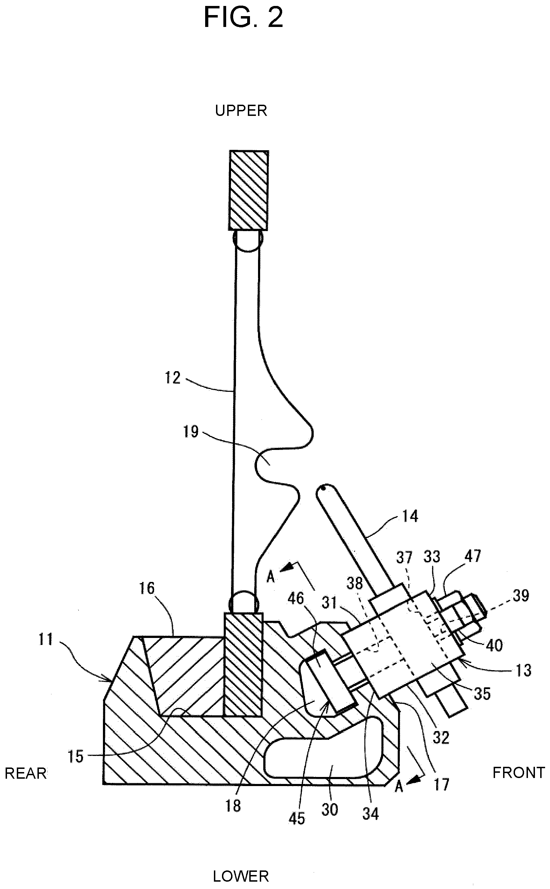

The following will describe a fastener of a weaving machine and a fixing device for a support of the weaving machine according to an embodiment of the present invention with reference to the accompanying drawings. In this embodiment, an air jet loom serves as the weaving machine of the present invention. For sake of explanation, in this embodiment, the front side and the rear side of the air jet loom are respectively defined by the right side and the left side of FIG. 2, and the upper side and the lower side of the air jet loom are respectively defined by the upper side and the lower side of FIG. 2.

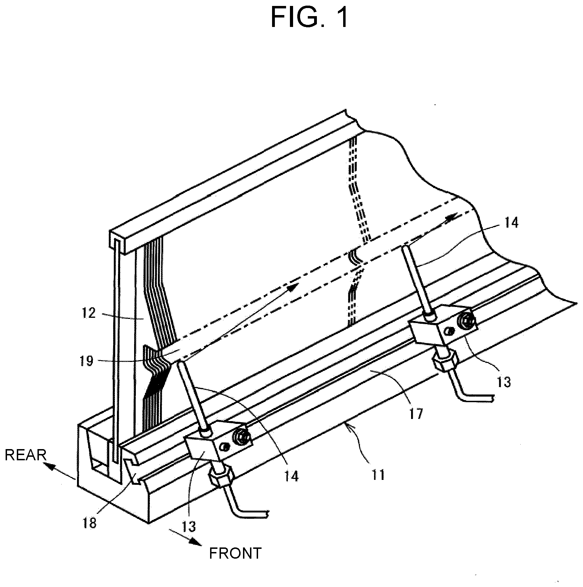

The air jet loom extends in the width direction of a frame (not illustrated), and includes a sley 11 configured to swing back and forth, a plurality of reeds 12 arranged in the longitudinal direction of the sley 11, a plurality of supports 13 supported by the sley 11, and a plurality of sub-nozzles 14 supported by the plurality of supports 13, as illustrated in FIG. 1. As illustrated in FIG. 2, the sley 11 has a groove 15 for fixing the reeds 12 via a wedge member 16, an inclined surface 17 that is formed on the front portion of the sley 11, and a support groove 18 that is recessed in the inclined surface 17. Each of the reeds 12, which is fixed to the sley 11 via the wedge member 16, has a weft yarn guide passage 19 that guides a travelling weft yarn (not illustrated). The inclined surface 17 extends obliquely upward in the front portion of the sley 11, and also extends in the longitudinal direction of the sley 11.

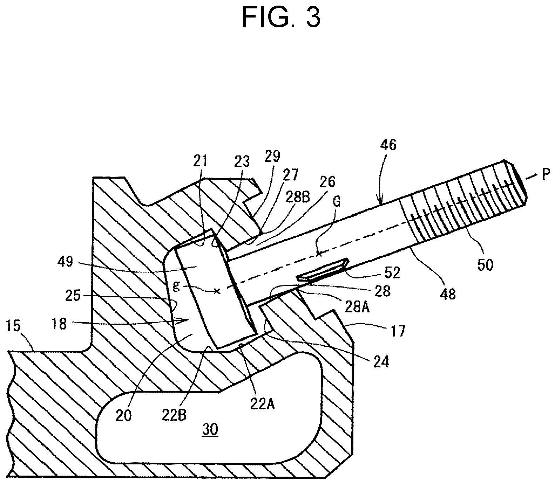

As illustrated in FIG. 3, the support groove 18 has an upper wall surface 21, a first lower wall surface 22A, a second lower wall surface 22B, an upper front wall surface 23, a lower front wall surface 24, and a rear wall surface 25 that cooperate to define a groove space 20, and a front opening 26 that is opened on the inclined surface 17 and in communication with the groove space 20. The upper wall surface 21 is located above the groove space 20. The upper wall surface 21 is inclined rearward and downward from the front side, and extends perpendicularly to the inclined surface 17. The rear wall surface 25 extends downward from a lower end of the upper wall surface 21. The upper front wall surface 23 extends frontward and downward from an upper end of the upper wall surface 21. The second lower wall surface 22B extends frontward from a lower end of the rear wall surface 25. The first lower wall surface 22A extends frontward and upward from a front end of the second lower wall surface 22B. The lower front wall surface 24 extends rearward and upward from a front end of the first lower wall surface 22A.

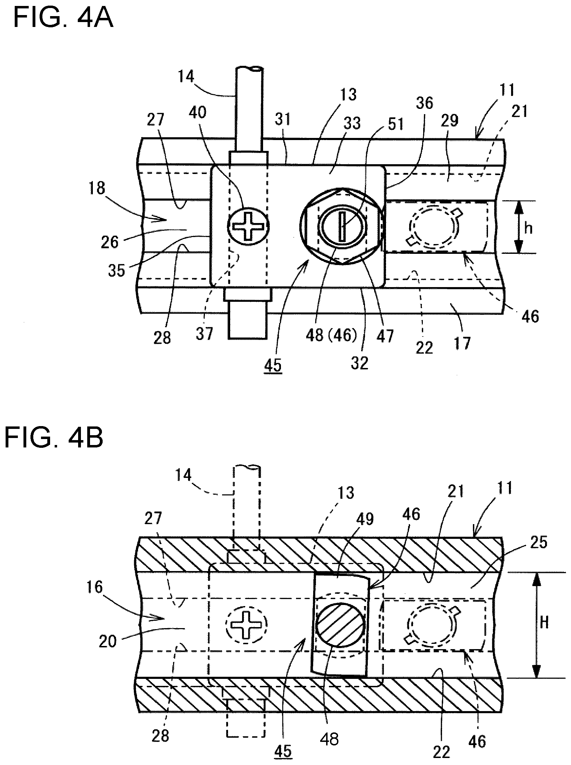

The front opening 26 is perpendicular to the inclined surface 17, and defined by an upper opening surface 27 and a lower opening surface 28 that face each other. The upper opening surface 27 is perpendicularly connected to the upper front wall surface 23. The lower opening surface 28 is perpendicularly connected to the lower front wall surface 24. The support groove 18 has a groove width H that is defined by a distance between the upper wall surface 21 and the first lower wall surface 22A, as illustrated in FIG. 4. The support groove 18 further has an opening width h that is defined by a distance between the upper opening surface 27 and the lower opening surface 28. The upper front wall surface 23 and the lower front wall surface 24 are in the same plane. Accordingly, the support groove 18 has an approximately T-shaped cross-section. The support groove 18 extends in the longitudinal direction of the sley 11. The inclined surface 17 has a positioning groove 29 for positioning the supports 13, and the positioning groove 29 extends in the longitudinal direction of the sley 11. The lower opening surface 28 has a front lower edge 28A that is located at the boundary of the lower opening surface 28 and the positioning groove 29. The upper opening surface 27 has a front upper edge 28B that is located at the boundary of the upper opening surface 27 and the positioning groove 29. The front lower edge 28A and the front upper edge 28B are provided in a pair. As illustrated in FIGS. 2 and 3, the sley 11 has a hollow 30 under the support groove 18. The hollow 30 extends in the longitudinal direction of the sley 11.

The following will describe the supports 13 that are supported by the sley 11. As illustrated in FIGS. 2 and 4A, each of the supports 13 is formed in an approximately parallelepiped, and has a first surface 31, a second surface 32 parallel to the first surface 31, a third surface 33 perpendicular to the second surface 32, a fourth surface 34 parallel to the third surface 33, a fifth surface 35 perpendicular to the first surface 31 and the third surface 33, and a sixth surface 36 parallel to the fifth surface 35. The support 13 has a sub-nozzle insertion hole 37 that is formed through the first surface 31 and the second surface 32, and a fastener insertion hole 38 that is formed through the third surface 33 and the fourth surface 34 and serves as a through hole of the present invention. The fastener insertion hole 38 has an elongated shape. The support 13 has a bolt hole 39 that is formed through the third surface 33 and connected to the sub-nozzle insertion hole 37.

Each sub-nozzle 14 is inserted through the sub-nozzle insertion hole 37 of the support 13, and fixed to the support 13 by a fixing bolt 40 screwed into the bolt hole 39 of the support 13. A fastener 46, which will be described later, is inserted through the fastener insertion hole 38 of the support 13.

In this embodiment, the airjet loom includes a fixing device 45 for fixing the corresponding support 13 (hereinafter, simply referred to as a fixing device 45). The fixing device 45 is a device for fixing the support 13, which supports the sub-nozzle 14, to the sley 11. The fixing device 45 includes the fastener 46 and a nut 47 mounted to the fastener 46.

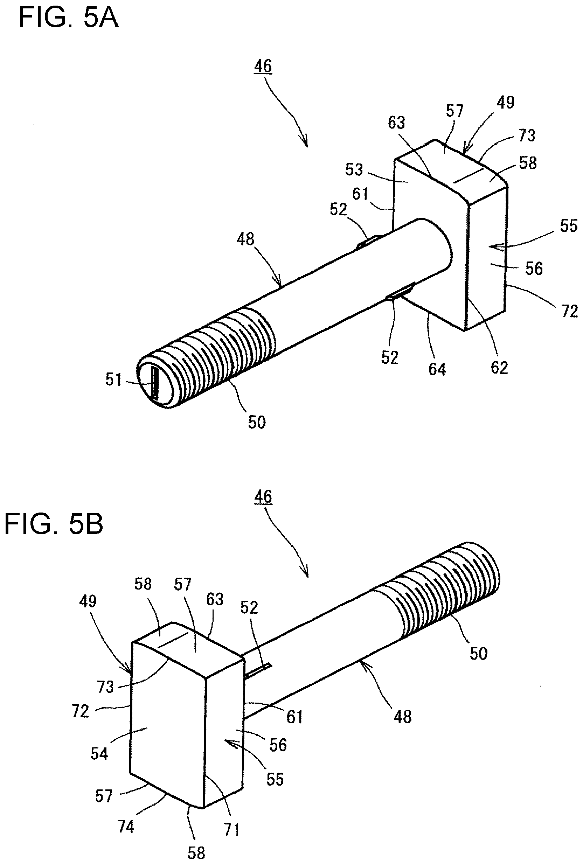

As illustrated in FIGS. 3, 5A, and 5B, the fastener 46 includes a shank 48 that has a solid cylindrical shape having an axis P, and a head 49 that is formed in an approximately rectangular parallelepiped and connected to a proximal end of the shank 48. An outer peripheral surface of the shank 48 has an external-thread portion 50 at a distal end of the shank 48 that is disposed on the opposite side of the proximal end of the shank 48. The distal end of the shank 48 has an end face in which a slot 51 is formed, wherein the slot 51 extends in a radial direction of the shank 48. The slot 51 is parallel to the longitudinal direction (long side) of the head 49. The shank 48 has a pair of projections 52 on a part of the outer peripheral surface of the shank 48 on which the external-thread portion 50 is not formed, and each of the projections 52 extends outward in the radial direction of the shank 48. The projections 52 are 180 degrees apart from each other in a circumferential direction of the shank 48. The projections 52 of the shank 48 are each disposed at a position corresponding to the fastener insertion hole 38 of the support 13 in an axial direction of the shank 48.

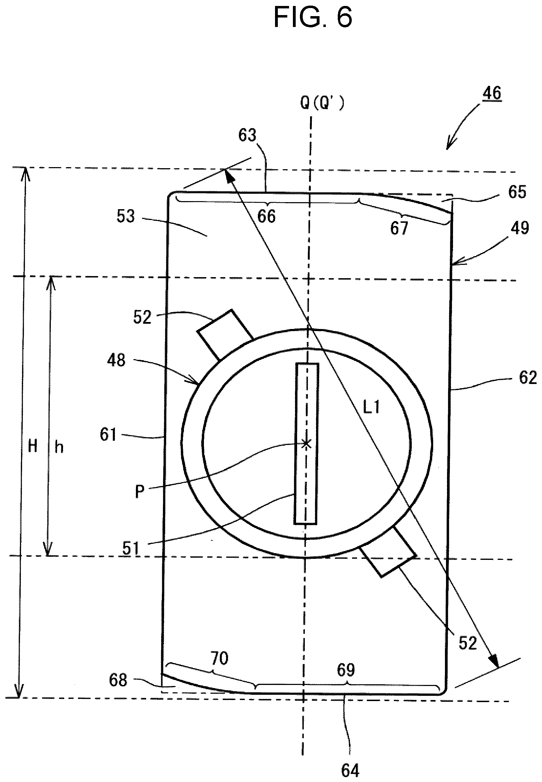

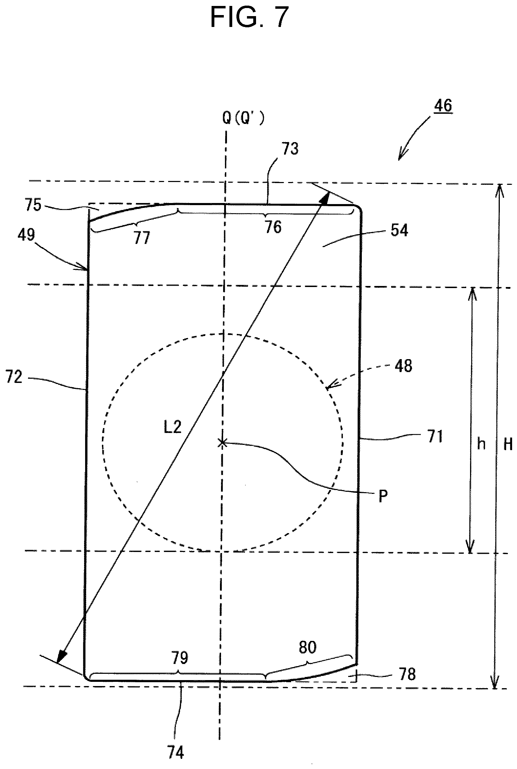

As illustrated in FIGS. 5A and 5B, the head 49 has a first end face 53, a second end face 54, and a side surface 55. The first end face 53 is connected to the proximal end of the shank 48 and has an approximately quadrilateral shape. The second end face 54 is located opposite to the first end face 53 and has an approximately quadrilateral shape. The side surface 55 is bounded by the outer edge of the first end face 53 and the outer edge of the second end face 54. As illustrated in FIGS. 6 and 7, the first end face 53 and the second end face 54 of the head 49 has the same shape when viewed from the direction of the axis P.

The first end face 53 has an approximately rectangular shape. As illustrated in FIG. 6, the outer edge of the first end face 53 has a first long side 61, a second long side 62, a first short side 63, and a second short side 64. The first long side 61 and the second long side 62 serve as a pair of long sides of the present invention. The first short side 63 and the second short side 64 serve as a pair of short sides of the present invention. The first long side 61 and the second long side 62 face and parallel to each other. The first short side 63 and the second short side 64 face and parallel to each other. A corner of the first long side 61 and the first short side 63 is chamfered. A corner of the second long side 62 and the second short side 64 is chamfered.

A chamfered first cutout 65 is formed at a corner of the first short side 63 and the second long side 62. The first short side 63 has a first straight portion 66 that extends from the first long side 61, and a first cutout line 67 that forms the first cutout 65. The first cutout 65, the first straight portion 66, and the first cutout line 67 serve as a cutout, a straight portion, and a cutout line of the present invention, respectively. The first cutout line 67 is curved and partly arc-shaped with a predetermined curvature, wherein the axis P serves as the center of the curvature. One end and the other end of the first cutout line 67 are respectively connected to one end of the first straight portion 66 and one end of the second long side 62.

A chamfered second cutout 68 is formed at a corner of the second short side 64 and the first long side 61. The second short side 64 has a second straight portion 69 that extends from the second long side 62, and a second cutout line 70 that forms the second cutout 68. The second cutout 68, the second straight portion 69, and the second cutout line 70 serve as a cutout, a straight portion, and a cutout line of the present invention, respectively. The second cutout line 70 is curved and partly arc-shaped with a predetermined curvature, wherein the axis P serves as the center of the curvature. One end and the other end of the second cutout line 70 are respectively connected to one end of the second straight portion 69 and one end of the first long side 61. Accordingly, the second short side 64 and the first short side 63 are symmetric with respect to the axis P.

Next, the second end face 54 has an approximately rectangular shape. As illustrated in FIG. 7, the outer edge of the second end face 54 has a first long side 71, a second long side 72, a first short side 73, and a second short side 74. The first long side 71 and the second long side 72 serve as a pair of long sides of the present invention. The first short side 73 and the second short side 74 serve as a pair of short sides of the present invention. The first long side 71 and the second long side 72 face and parallel to each other. The first short side 73 and the second short side 74 face and parallel to each other. A corner of the first long side 71 and the first short side 73 is chamfered. A corner of the second long side 72 and the second short side 74 is chamfered.

A chamfered first cutout 75 is formed at a corner of the first short side 73 and the second long side 72. The first short side 73 has a first straight portion 76 that extends from the first long side 71, and a first cutout line 77 that forms the first cutout 75. The first cutout 75, the first straight portion 76, and the first cutout line 77 serve as a cutout, a straight portion, and a cutout line of the present invention, respectively. The first cutout line 77 is curved and partly arc-shaped with a predetermined curvature, wherein the axis P serves as the center of the curvature. One end and the other end of the first cutout line 77 are respectively connected to one end of the first straight portion 76 and one end of the second long side 72. Accordingly, the second short side 74 and the first short side 73 are symmetric with respect to the axis P.

A chamfered second cutout 78 is formed at a corner of the second short side 74 and the first long side 71. The second short side 74 has a second straight portion 79 that extends from the second long side 72, and a second cutout line 80 that forms the second cutout 78. The second cutout 78, the second straight portion 79, and the second cutout line 80 serve as a cutout, a straight portion, and a cutout line of the present invention, respectively. The second cutout line 80 is curved and partly arc-shaped with a predetermined curvature, wherein the axis P serves as the center of the curvature. One end and the other end of the second cutout line 80 are respectively connected to one end of the second straight portion 79 and one end of the first long side 71. Accordingly, the second short side 74 and the first short side 73 are symmetric with respect to the axis P.

As illustrated in FIGS. 5A and 5B, the side surface 55 has a pair of long-side flat surfaces 56, a pair of short-side flat surfaces 57, and a pair of curved surfaces 58. One of the long-side flat surfaces 56 is bounded by the first long side 61 of the first end face 53 and the first long side 71 of the second end face 54. The other of the long-side flat surfaces 56 is bounded by the second long side 62 of the first end face 53 and the second long side 72 of the second end face 54. One of the short-side flat surfaces 57 is bounded by the first straight portion 66 of the first end face 53 and the first straight portion 76 of the second end face 54. The other of the short-side flat surfaces 57 is bounded by the second straight portion 69 of the first end face 53 and the second straight portion 79 of the second end face 54. One of the curved surfaces 58 is bounded by the first cutout line 67 of the first end face 53 and the first cutout line 77 of the second end face 54. The other of the curved surfaces 58 is bounded by the second cutout line 70 of the first end face 53 and the second cutout line 80 of the second end face 54. One of the short-side flat surfaces 57 and one of the curved surfaces 58 cooperate to form a continuous gentle surface. The other of the short-side flat surfaces 57 and the other of the curved surfaces 58 cooperate to form a continuous gentle surface.

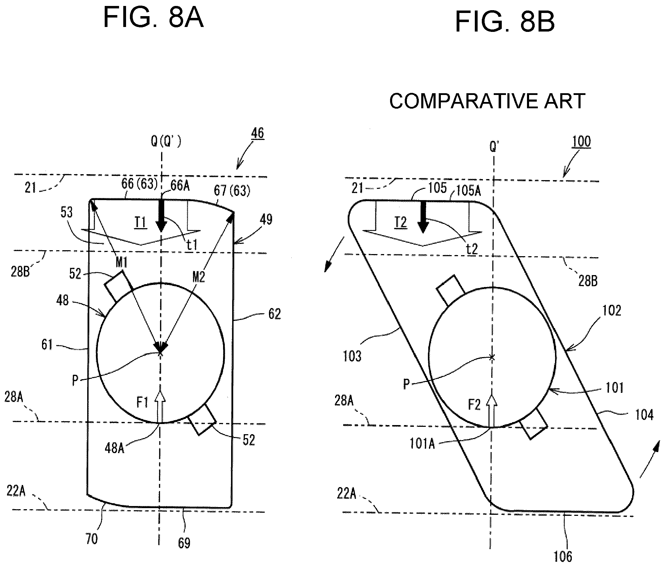

The head 49 has a size that allows the head 49 to be inserted into the support groove 18 from the front opening 26 and to rotate to a predetermined position in the support groove 18. Specifically, as illustrated in FIGS. 6 and 7, the first long side 61 and the second long side 62 of the first end face 53, and the first long side 71 and the second long side 72 of the second end face 54 are shorter than the groove width H and longer than the opening width h. The first short side 63 and the second short side 64 of the first end face 53 and the first short side 73 and the second short side 74 of the second end face 54 are shorter than the opening width h. A straight-line distance between the corner of the first long side 61 and the first short side 63 and the corner of the second long side 62 and the second short side 64 serves as a first maximum length L1. A straight-line distance between the corner of the first long side 71 and the first short side 73 and the corner of the second long side 72 and the second short side 74 serves as a second maximum length L2. The first maximum length L1 is a maximum length that can be obtained on the first end face 53. The second maximum length L2 is a maximum length that can be obtained on the second end face 54. The first maximum length L1 and the second maximum length L2 have the same length that is longer than the groove width H. As illustrated in FIG. 8A, the first end face 53 has a minimum distance, which serves as a first distance M1, between the axis P and one end of the first short side 63 located at the corner of the first long side 61 and the first short side 63. The first end face 53 further has a minimum distance, which serves as a second distance M2, between the axis P and the other end of the first short side 63 located at the corner of the second long side 62 and the first short side 63. The first cutout 65 of the first end face 53 is formed at the other end of the first short side 63. The first distance M1 is longer than the second distance M2. The proximal end of the shank 48, which does not have the external-thread portion 50, is connected to the first end face 53 such that the head 49 rotates around the axis P. The first straight portion 66 of the first end face 53 intersects an imaginary orthogonal line Q. The imaginary orthogonal line Q is a straight line that passes through the axis P and intersects the first straight portion 66 at a right angle. The length of the head 49 between the short-side flat surfaces 57 is shorter than the groove width H and longer than the opening width h. The shank 48 has a solid cylindrical shape that extends in the direction of the axis P and has a constant diameter smaller than the opening width h. A gravity center g of the head 49 is located at the axis P. A gravity center G of the fastener 46 is at least located at the axis P.

The following will describe the advantageous effects of the embodiment of the present invention. As illustrated in FIGS. 3, 4A, 4B, and 8A, for mounting the fastener 46 to the sley 11, the operator first inserts the head 49 into the groove space 20 from the front opening 26. While the head 49 is inserted from the front opening 26, one and the other of the long-side flat surfaces 56 respectively face the lower opening surface 28 and the upper opening surface 27. When the head 49 is located in the groove space 20 after passing through the front opening 26, one and the other of the long-side flat surfaces 56 respectively face the first lower wall surface 22A and the upper wall surface 21. Further, the first end face 53 is located in the groove space 20 and faces the front opening 26 (see the fastener 46 indicated by the two-dotted line in FIG. 4A). The shank 48 protrudes out of the front opening 26 with the head 49 placed in the support groove 18. When the head 49 of the fastener 46 is being inserted into the groove space 20, the longitudinal direction of the slot 51 in the distal end face of the shank 48 is parallel to the longitudinal direction of the sley 11.

Next, the head 49 is rotated around the axis P of the shank 48 with rotation of the shank 48 so that the head 49 is held in the support groove 18. Specifically, the operator inserts the head 49 as indicated by the two-dotted line in FIGS. 4A and 4B, and rotates the fastener 46 around the axis P in one rotational direction (in the clockwise direction in FIG. 6) while bringing the shank 48 into contact with the front lower edge 28A of the lower opening surface 28. Accordingly, one and the other of the short-side flat surfaces 57 respectively face the upper wall surface 21 and the first lower wall surface 22A. When the operator further rotates the fastener 46, as illustrated in FIG. 4B, one and the other of the short-side flat surfaces 57 partly contact the upper wall surface 21 and the first lower wall surface 22A, respectively (that is, for example, a part of one short-side flat surface 57 adjacent to one end of the first short side 63 contacts the upper wall surface 21). The shank 48 is located away from the lower opening surface 28 and the upper opening surface 27 of the front opening 26. The gravity center G of the fastener 46 is located at the axis P of the shank 48 and outside the front opening 26 of the support groove 18.

The head 49 is inclined upward with respect to a shank contact point 48A as a fulcrum (see FIG. 8A) due to a gravitational force acting on the shank 48 when the operator releases the fastener 46. Accordingly, when the operator releases the fastener 46, the first straight portion 66 of the fastener 46 contacts the upper front wall surface 23 (see FIG. 3). The head 49 of the fastener 46 receives a distributed reaction force T1, which is a downward reaction force, from the upper front wall surface 23. The distributed reaction force T1 is a distributed load which is applied by the upper front wall surface 23 to the whole of the first straight portion 66 of the head 49 as illustrated in FIG. 8A. The fastener 46 receives an upward shank reaction force F1 from the front lower edge 28A since the shank 48 contacts the front lower edge 28A at the shank contact point 48A. The distributed reaction force T1 has a head reaction force t1 that is a reaction component. A line Q' is a straight line passing through the axis P in the vertical direction. The head reaction force t1 overlaps the line Q' in the direction of the axis P. The shank reaction force F1 overlaps the line Q' in the direction of the axis P. The first straight portion 66 contacts the upper front wall surface 23 at a head contact point 66A that serves as a starting point of the head reaction force t1. The head contact point 66A is the intersection of the first straight portion 66 and the line Q' in the direction of the axis P. The head reaction force t1 and the shank reaction force F1 overlap the line Q', and face each other in the direction of the axis P. Accordingly, the head reaction force t1 faces the shank reaction force F1 on the line Q' at least in the direction of the axis P, so that the fastener 46 is held and fixed between the upper front wall surface 23 and the front lower edge 28A. This regulates the rotation of the head 49 in the support groove 18. FIG. 8A illustrates that the head 49 is positioned such that the imaginary orthogonal line Q overlaps the line Q' in the direction of the axis P. However, FIG. 8A merely and schematically illustrates a relationship between forces acting on the fastener 46, and the actual position of the head 49 may be different from the position of the head 49 illustrated in FIG. 8A. The head 49 may be positioned such that the imaginary orthogonal line Q is rotated from the line Q' around the axis P in one rotational direction (in the clockwise direction in FIG. 8A).

The following will describe a comparative example. As illustrated in FIG. 8B, a fastener 100 according to the comparative example includes a shank 101 that has a solid cylindrical shape having an axis P, and a head 102 that is formed in an approximately rectangular parallelepiped and connected to a proximal end of the shank 101. A first end face of the head 102 is formed in an approximately parallelogram. The outer edge of the first end face has a first long side 103, a second long side 104, a first short side 105, and a second short side 106. The first long side 103 and the second long side 104 each include a straight portion. For mounting the fastener 100 to the sley 11, the operator first inserts the head 102 into the front opening 26. The operator then rotates the fastener 100 around the axis P in one rotational direction (in the clockwise direction in FIG. 8B) while bringing the shank 101 into contact with the front lower edge 28A of the lower opening surface 28. When the operator releases the fastener 100 after rotating the fastener 100 to a predetermined position, a straight portion of the first short side 105 and the shank 101 of the fastener 100 respectively contact the upper front wall surface 23 and the front lower edge 28A. The head 102 of the fastener 100 receives a distributed reaction force T2, which is a downward reaction force, from the upper front wall surface 23. The distributed reaction force T2 is a distributed load that is applied by the upper front wall surface 23 to the whole of the straight portion of the head 102. The fastener 100 receives an upward shank reaction force F2 from the front lower edge 28A since the shank 101 contacts the front lower edge 28A at a shank contact point 101A. The distributed reaction force T2 has a head reaction force t2 that is a reaction component. The first short side 105 is located on the other rotational direction side (in FIG. 8B, the counterclockwise direction side) with respect to the line Q' when the first short side 105 is viewed from the front opening 26 of the support groove 18. The shank contact point 101A is located on the line Q' when viewed from the direction of the axis P of the shank 101, but a head contact point 105A is not located on the line Q' when viewed from the direction of the axis P. Accordingly, the shank 101 receives the shank reaction force F2 that is upwardly applied at the shank contact point 101A along the line Q', but the head 102 receives the head reaction force t2 that is downwardly applied at the head contact point 105A not along the line Q'. This causes a force that rotates the fastener 100 around the shank contact point 101A in the other rotational direction (in FIG. 8B, in the counterclockwise direction). This configuration therefore does not regulate the rotation of the head 102 of the fastener 100 in the support groove 18.

Next, the following will describe an example where the support 13 is mounted to the fastener 46, wherein the rotation of the head 49 in the support groove 18 of the sley 11 is regulated. First, the operator moves the support 13 so that the fourth surface 34 of the support 13 faces the front opening 26 of the support groove 18. The operator then inserts the fastener 46, which is held in the support groove 18, through the fastener insertion hole 38 of the support 13 to fit the support 13 in the positioning groove 29 of the sley 11. Each projection 52 on the outer peripheral surface of the shank 48 contacts the hole wall of the fastener insertion hole 38 to regulate the rotation of the fastener 46 in the other rotational direction (in FIG. 4B, in the counterclockwise direction).

The operator then mounts the nut 47 to the external-thread portion 50 protruding out of the fastener insertion hole 38 of the support 13. The rotation of the nut 47 rotates the head 49 in one rotational direction (in FIG. 6, in the clockwise direction), so that the short-side flat surface 57 adjacent to the first short side 63 and the short-side flat surface 57 adjacent to the second short side 64 respectively contact the upper wall surface 21 and the first lower wall surface 22A. The corners, which cooperate to provide the first maximum length L1, respectively contact the upper wall surface 21 and the first lower wall surface 22A, and the another corners, which cooperate to provide the second maximum length L2, respectively contact the upper wall surface 21 and the first lower wall surface 22A. This regulates the rotation of the head 49 of the fastener 46 in the support groove 18, so that the support 13 is fixed to the sley 11 by the fastener 46 and the nut 47. The corresponding sub-nozzle 14 is inserted through the sub-nozzle insertion hole 37 of the support 13, and fixed to the support 13 by the fixing bolt 40 screwed into the bolt hole 39 of the support 13.

The embodiment of the present invention provides advantageous effects as below.
(1) The first straight portion 66 of the head 49 of the fastener 46 contacts the upper front wall surface 23 that is an upper portion of an inner wall surface of the support groove 18, and the shank 48 of the fastener 46 contacts the front lower edge 28A of the lower opening surface 28 of the sley 11. Both of the head contact point 66A of the first straight portion 66 and the shank contact point 48A of the shank 48 are located on the line Q' when viewed from the direction of the axis P of the shank 48. The shank 48 and the head 49 respectively receive the upward shank reaction force F1 at the shank contact point 48A and the downward head reaction force t1 at the head contact point 66A on the first straight portion 66. That is, the shank 48 and the head 49 respectively receive the upward shank reaction force F1 and the downward head reaction force t1 that act in opposite directions along the line Q' when viewed from the direction of the axis P. The shank reaction force F1 and the head reaction force t1 act in the opposite directions, so that the fastener 46 is held and fixed between the upper front wall surface 23 and the front lower edge 28A. This configuration regulates the rotation of the head 49 in the support groove 18, unlike the fastener 100 which has the parallelogram head 102 and to which the shank reaction force F2 and the head reaction force t2 are applied.
(2) The head 49 has the first cutout 65 at the other end of the first short side 63 and formed by the first cutout line 67 of the first end face 53. A rotational direction in which the corner of the first long side 61 and the first short side 63 of the first end face 53 moves toward the upper wall surface 21 is defined as one rotational direction, and a rotational direction in which the first cutout 65 of the first end face 53 moves toward the upper wall surface 21 is defined as the other rotational direction. Since the first cutout 65 does not have a corner that contacts the upper wall surface 21 to regulate the rotation of the head 49, this configuration allows the head 49 to rotate in one rotational direction in the support groove 18. This configuration therefore allows the head 49 to rotate so that one of the short-side flat surfaces 57 partly contacts the upper wall surface 21.
(3) The first cutout line 67 of the head 49 is curved. This allows the head 49 to rotate smoothly in one rotational direction.
(4) The fastener 46 is inserted into the support groove 18 and prevented from rotating in the other rotational direction, and the support 13 is then fixed to the sley 11 by the fastener 46 already in the support groove 18. This configuration facilitates the positioning of the support 13 relative to the sley 11 as compared with a configuration in which the fastener 46 is fixed to the sley 11 after the fastener 46 is inserted into the support 13.
(5) The distal end face of the shank 48 has the slot 51 that extends parallel to the longitudinal direction of the head 49. This shows the posture of the head 49 in the support groove 18 in the rotational direction of the head 49.

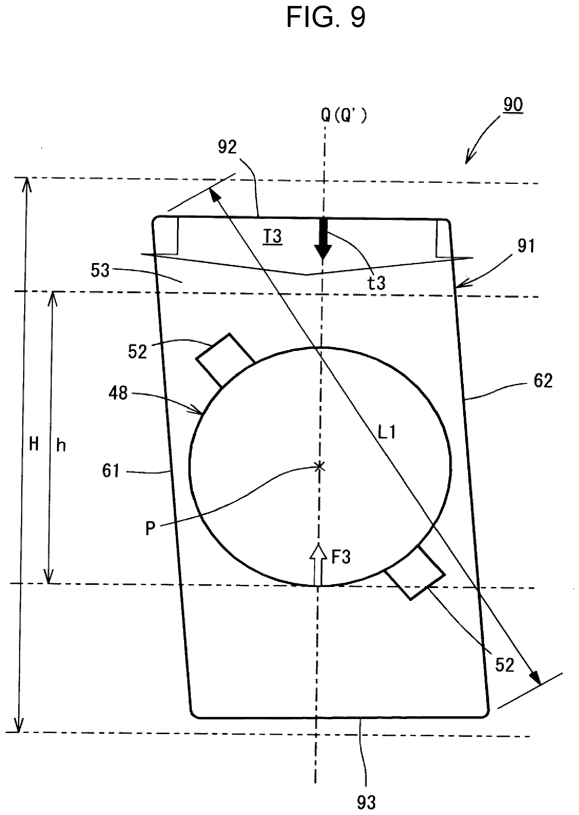

The present invention is not limited to the aforementioned embodiment and may be modified variously within the scope of the present invention as below.
∘ According to the embodiment, the first straight portion 66 of the first end face 53 of the head 49 contacts the upper front wall surface 23, but the present invention is not limited to this configuration. For example, the first straight portion 76 of the second end face 54 of the head 49 may contact the upper wall surface 21 that is the upper portion of the inner wall surface of the support groove 18. This configuration allows the fastener 46 to be held in the support groove 18 as well as the configuration in which the first straight portion 66 of the first end face 53 contacts the upper front wall surface 23.
∘ According to the embodiment, the first end face 53 and the second end face 54 of the head 49 each have an approximately rectangular shape, but the present invention is not limited to this configuration. For example, the fastener of the present invention may be a fastener 90 having a head 91, wherein the first end face 53 and the second end face 54 of the head 91 are each formed in an approximately parallelogram, as illustrated in FIG. 9. The outer edge of the first end face 53 has a first short side 92 and a second short side 93. The first short side 92 and the second short side 93 each have a straight portion, and the straight portion of the first short side 92 faces and is parallel to the straight portion of the second short side 93. The straight portion of the first short side 92 intersects the imaginary orthogonal line Q. The imaginary orthogonal line Q is a straight line that passes through the axis P and intersects the straight portion of the first short side 92 at a right angle. The straight portion of the first short side 92 intersects the imaginary orthogonal line Q, so that a shank reaction force F3 and a head reaction force t3, which is a distributed reaction force component, act in opposite directions along the line Q' when viewed from the direction of the axis P in the support wall 18, like the aforementioned embodiment of the present invention. Accordingly, the head 91 is held and fixed between the upper front wall surface 23 and the front lower edge 28A. This regulates the rotation of the head 91 of the fastener 90 in the support groove 18.
∘ According to the embodiment, the head 49 has the first cutout 65 formed by chamfering the corner of the first short side 63 and the second long side 62, the second cutout 68 formed by chamfering the corner of the second short side 64 and the first long side 61, the first cutout 75 formed by chamfering the corner of the first short side 73 and the second long side 72, and the second cutout 78 formed by chamfering the corner of the second short side 74 and the first long side 71. This configuration allows the operator to rotate the head 49 of the fastener 46 in the support groove 18 in one rotational direction until one and the other of the short-side flat surfaces 57 partly contact the upper wall surface 21 and the first lower wall surface 22A, respectively. However, the present invention is not limited to this configuration. For example, the head 49 may have the first cutout 65 formed by chamfering the corner of the first short side 63 and the first long side 61, the second cutout 68 formed by chamfering the corner of the second short side 64 and the second long side 62, the first cutout 75 formed by chamfering the corner of the first short side 73 and the first long side 71, and the second cutout 78 formed by chamfering the corner of the second short side 74 and the second long side 72. This configuration allows the operator to rotate the head 49 of the fastener 46 in the support groove 18 in the other rotational direction until one and the other of the short-side flat surfaces 57 partly contact the upper wall surface 21 and the first lower wall surface 22A, respectively.
∘ According to the embodiment, the shank 48 of the fastener 46 is located away from the lower opening surface 28 and the upper opening surface 27 of the front opening 26 when the operator rotates the head 49 of the fastener 46 in the support groove 18 so that one and the other of the short-side flat surfaces 57 partly contact the upper wall surface 21 and the first lower wall surface 22A, respectively. However, the present invention is not limited to this configuration. For example, the shank 48 may be in contact with the front lower edge 28A of the lower opening surface 28 of the front opening 26. This configuration regulates the rotation of the head 49 in the support groove 18 as well as the configuration in which the shank 48 is located away from the lower opening surface 28 and the upper opening surface 27 of the front opening 26.

## Claims

1. A fixing device (45) for a support (13) of a weaving machine, the fixing device (45) comprising:
a fastener (46) comprising
a head (49) insertable into a support groove (18) that is recessed in an inclined surface (17) formed on a front portion of a sley (11) of the weaving machine from a front opening (26) of the support groove (18);
a shank (48) connected to the head (49) and having a pair of projections (52), each of the projections (52) extending outward in a radial direction of the shank (48); and
an external-thread portion (50) formed on the shank (48), wherein
the shank (48) protrudes out of the front opening (26) with the head (49) placed in the support groove (18), and
the head (49) is rotated around an axis (P) of the shank (48) with rotation of the shank (48) so that the head (49) is held in the support groove (18);
and
a nut (47) mounted to the external-thread portion (50);
wherein the shank (48) is insertable through an insertion hole (38) formed in the support (13) so that each projection (52) can contact a hole wall of the insertion hole (38) to regulate a rotation of the fastener (46), wherein
the head (49) has an approximately quadrilateral shape that has a pair of long sides (61, 62, 71, 72) and a pair of short sides (63, 64, 73, 74),
at least one of the short sides (63, 64, 73, 74) has a straight portion (66, 69, 76, 79), and a distance (M1) between one end of the at least one short side (63, 64, 73, 74) and the axis (P) is longer than a distance (M2) between the other end of the at least one short side (63, 64, 73, 74) and the axis (P), and
the straight portion (66, 69, 76, 79) intersects at a right angle an imaginary orthogonal line (Q) that passes through the axis (P).

2. The fixing device (45) for the support (13) of the weaving machine according to claim 1, **characterized in that**
the at least one short side (63, 64, 73, 74) has a cutout (65, 68, 75, 78) at the other end of the at least one short side (63, 64, 73, 74), and
the cutout (65, 68, 75, 78) is formed by a cutout line (67, 70, 77, 80) that is connected to the straight portion (66, 69, 76, 79) of the at least one short side (63, 64, 73, 74) and one of the long sides (61, 62, 71, 72).

3. The fixing device (45) for the support (13) of the weaving machine according to claim 1 or 2, **characterized in that**
the cutout line (67, 70, 77, 80) is curved.

## Patentansprüche

1. Fixiervorrichtung (45) für eine Abstützung (13) einer Webmaschine, wobei die Fixiervorrichtung (45) Folgendes aufweist:
eine Befestigung (46) mit
einem Kopf (49), der in eine Stütznut (18), die in einer geneigten Fläche (17) vertieft ist, die an einem vorderen Abschnitt einer Weblade (11) der Webmaschine ausgebildet ist, von einer vorderen Öffnung (26) der Stütznut (18) einführbar ist;
einem Schaft (48), der mit dem Kopf (49) verbunden ist und ein Paar an Vorsprüngen (52) hat, wobei jeder der Vorsprünge (52) sich nach außen in einer radialen Richtung des Schafts (48) erstreckt; und
einem Außengewindeabschnitt (50), der an dem Schaft (48) ausgebildet ist, wobei
der Schaft (48) von der vorderen Öffnung (26) nach außen vorragt, wobei der Kopf (49) in der Stütznut (18) angeordnet ist, und
der Kopf (49) um eine Achse (P) des Schafts (48) bei Drehung des Schafts (48) so gedreht wird, dass der Kopf (49) in der Stütznut (18) gehalten wird; und
einer Mutter (47), die an dem Außengewindeabschnitt (50) montiert ist;
wobei der Schaft (48) durch ein Einführloch (38), das in der Abstützung (13) ausgebildet ist, so einführbar ist, dass jeder Vorsprung (52) mit einer Lochwand des Einführlochs (38) in Kontakt gelangen kann, um eine Drehung der Befestigung (46) zu regulieren,
wobei der Kopf (49) eine annähernd vierseitige Form hat, die ein Paar an langen Seiten (61, 62, 71, 72) und ein Paar an kurzen Seiten (63, 64, 73, 74) hat,
zumindest eine der kurzen Seiten (63, 64, 73, 74) einen geraden Abschnitt (66, 69, 76, 79) hat, und ein Abstand (M1) zwischen einem Ende der zumindest einen kurzen Seite (63, 64, 73, 74) und der Achse (P) länger ist als ein Abstand (M2) zwischen dem anderen Ende der zumindest einen kurzen Seite (63, 64, 73, 74) und der Achse (P), und
der gerade Abschnitt (66, 69, 76, 79) unter einem rechten Winkel eine gedachte senkrechte Linie (Q) schneidet, die durch die Achse (P) tritt.

2. Fixiervorrichtung (45) für die Abstützung (13) der Webmaschine gemäß Anspruch 1, **dadurch gekennzeichnet, dass**
die zumindest eine kurze Seite (63, 64, 73, 74) einen Ausschnitt (65, 68, 75, 78) an dem anderen Ende der zumindest einen kurzen Seite (63, 64, 73, 74) hat, und
der Ausschnitt (65, 68, 75, 78) durch eine Ausschnittlinie (67, 70, 77, 80) ausgebildet ist, die mit dem geraden Abschnitt (66, 69, 76, 79) der zumindest einen kurzen Seite (63, 64, 73, 74) und einer der langen Seiten (61, 62, 71, 72) verbunden ist.

3. Fixiervorrichtung (45) für die Abstützung (13) der Webmaschine gemäß Anspruch 1 oder 2, **dadurch gekennzeichnet, dass**
die Ausschnittlinie (67, 70, 77, 80) gekrümmt ist.

## Revendications

1. Dispositif de fixation (45) pour un support (13) d'une machine à tisser, le dispositif de fixation (45) comprenant :
une attache (46) comprenant
une tête (49) pouvant être insérée dans une rainure de support (18) qui est évidée dans une surface inclinée (17) formée sur une partie avant d'un battant (11) de la machine à tisser à partir d'une ouverture avant (26) de la rainure de support (18) ;
une tige (48) reliée à la tête (49) et ayant une paire de saillies (52), chacune des saillies (52) s'étendant vers l'extérieur dans une direction radiale de la tige (48) ; et
une partie de filetage extérieur (50) formée sur la tige (48), dans laquelle
la tige (48) fait saillie hors de l'ouverture avant (26) avec la tête (49) placée dans la rainure de support (18), et
la tête (49) est tournée autour d'un axe (P) de la tige (48) avec la rotation de la tige (48) de sorte que la tête (49) est maintenue dans la rainure de support (18) ; et
un écrou (47) monté sur la partie de filetage extérieur (50) ;
dans lequel la tige (48) peut être insérée à travers un trou d'insertion (38) formé dans le support (13) de sorte que chaque saillie (52) puisse entrer en contact avec une paroi de trou du trou d'insertion (38) pour réguler une rotation de l'attache (46),
dans lequel
la tête (49) a une forme approximativement quadrilatérale ayant une paire de côtés longs (61, 62, 71, 72) et une paire de côtés courts (63, 64, 73, 74),
au moins un des côtés courts (63, 64, 73, 74) a une partie droite (66, 69, 76, 79), et une distance (M1) entre une extrémité de l'au moins un côté court (63, 64, 73, 74) et l'axe (P) est plus longue qu'une distance (M2) entre l'autre extrémité de l'au moins un côté court (63, 64, 73, 74) et l'axe (P), et
la partie droite (66, 69, 76, 79) coupe à angle droit une ligne orthogonale imaginaire (Q) qui passe par l'axe (P).

2. Dispositif de fixation (45) pour le support (13) de la machine à tisser selon la revendication 1, **caractérisé en ce que**
l'au moins un côté court (63, 64, 73, 74) a une découpe (65, 68, 75, 78) à l'autre extrémité de l'au moins un côté court (63, 64, 73, 74), et
la découpe (65, 68, 75, 78) est formée par une ligne de découpe (67, 70, 77, 80) qui est reliée à la partie droite (66, 69, 76, 79) de l'au moins un côté court (63, 64, 73, 74) et d'un des côtés longs (61, 62, 71, 72).

3. Dispositif de fixation (45) pour le support (13) de la machine à tisser selon la revendication 1 ou 2, **caractérisé en ce que**
la ligne de découpe (67, 70, 77, 80) est incurvée.
